# EUROPÄISCHE PATENTANMELDUNG

(11) **EP 4 565 000 A1**
(43) Veröffentlichungstag der Anmeldung: **04.06.2025**
(21) Anmeldenummer: 23213156.5
(22) Anmeldetag: 29.11.2023
(51) Int. Cl.: H04W 84/12, H05B 47/19, H04L 12/28

(54) **VERFAHREN ZUR BILDUNG EINES PUNKT- ZU PUNKT-NETZWERKS AUS MEHREREN WLAN-FÄHIGEN GERÄTEN**

(71) Anmelder: Theben AG, 72401 Haigerloch (DE)
(72) Erfinder: Gulde, Thomas, 72351 Geislingen (DE); Herrmann, Robin, 72414 Rangendingen (DE); Schöndorfer, Tim, 71083 Herrenberg (DE)
(74) Vertreter: Westphal, Mussgnug & Partner Patentanwälte mbB

(57) **Zusammenfassung**

Bereitgestellt wird ein Verfahren zur Bildung eines Punkt- zu Punkt-Netzwerks aus mehreren WLAN-fähigen Geräten (1,2,3,4) und einem gesicherten WLAN-Accesspoint (5), bei dem
- jedes WLAN-fähige Gerät (1,2,3,4) nach dem erstmaligen Einschalten und/oder nach dem Starten einer Installationsroutine einen eigenen, offenen WLAN-Accesspoint mit einer individuellen SSID startet,
- durch Kommunikation der WLAN-fähigen Geräte (1,2,3,4) über die offenen WLAN-Accesspoints automatisiert ein Server-Gerät (4) bestimmt wird, das alle anderen WLAN-fähigen Geräte (1,2,3) direkt oder indirekt als Client-Gerät kontrolliert, wobei während der Bestimmung des Server-Geräts (4) die offenen WLAN-Accesspoints derjenigen WLAN-fähigen Geräte (1,2,3), die nicht das Server-Gerät (4) werden, deaktiviert werden,
- die Zugangsdaten für den gesicherten WLAN-Accesspoint (5) an das Server-Gerät (4) übermittelt werden,
- das Server-Gerät (4) mit diesen Zugangsdaten die direkt oder indirekt als Client-Geräte kontrollierten WLAN-fähigen Geräte (1,2,3) rekonfiguriert, so dass die rekonfigurierten Geräte eine Punkt-zu-Punkt Verbindung zum gesicherten WLAN-Accesspoint (5) aufbauen, und
- sich anschließend das Server-Gerät (4) mit diesen Zugangsdaten rekonfiguriert und den eigenen, offenen WLAN-Accesspoint abschaltet, so dass auch das rekonfigurierte Server-Gerät eine Punkt-zu-Punkt Verbindung zum gesicherten WLAN-Accesspoint (5) aufbaut.

## Beschreibung

Heutzutage müssen eine Vielzahl technischer Geräte in ein WLAN-Netz integriert werden, um sie einrichten und betreiben zu können. Dies geschieht üblicherweise durch Aufbau eines Punkt- zu Punkt- Netzes, bei dem jedes Gerät mit dem WLAN-Accesspoint (AP) kommuniziert und Kommunikationen zwischen den Geräten indirekt über den WLAN-Accesspoint verlaufen.

Dazu benötigt das Gerät Informationen, die es ihm erlauben, sich mit dem WLAN-Accesspoint (AP) zu verbinden, insbesondere dessen SSID und sein Password. Um dies zu ermöglichen, muss man nach der bislang üblichen Vorgehensweise diese Informationen am Gerät eingeben oder, wenn das Gerät nicht über eigene Eingabemittel verfügt, zu diesem Zweck eine Verbindung mit dem Gerät einrichten, beispielsweise mit einem Handgerät, wie einem Tablet oder Smartphone. Über die so eingerichtete Verbindung werden dann SSID und Passwort des WLAN -Accesspoints an das Gerät übermittelt, das sich mit diesen Informationen in das WLAN-Netz integrieren kann.

Während dieser Prozess beim Hinzufügen eines einzelnen Geräts zu einem bestehenden Netzwerk mit leistbarem Aufwand einhergeht, entwickelt er sich schnell zu einer stupiden Aufgabe, bei der man leicht Fehler macht, wenn eine Vielzahl von Geräten erstmals zu einem WLAN-Netz zusammengeschlossen werden sollen, beispielsweise im Rahmen der Installation eines Smart-Home-Systems.

Die Aufgabe der Erfindung besteht daher darin, ein vereinfachtes Verfahren zur Inbetriebnahme eines Systems aus mehreren WLAN-fähigen Geräten anzugeben. Diese Aufgabe wird gelöst durch ein Verfahren mit den Merkmalen des Patentanspruchs 1.

Bei dem erfindungsgemäßen Verfahren zur Bildung eines Punkt-zu Punkt-Netzwerks aus mehreren WLAN-fähigen Geräten und einem gesicherten WLAN-Accesspoint, startet jedes WLAN-fähige Gerät nach dem erstmaligen Einschalten und/oder nach dem Starten einer Installationsroutine einen eigenen, offenen WLAN-Accesspoint mit einer individuellen SSID.

Anschließend erfolgt eine Kommunikation der WLAN-fähigen Geräte miteinander über die offenen WLAN-Accesspoints, bei der automatisiert ein Server-Gerät bestimmt wird, das alle anderen WLAN-fähigen Geräte, die dem Netzwerk hinzugefügt werden sollen, direkt oder indirekt als Client-Gerät kontrolliert, wobei am Ende des Schritts der Bestimmung des Server-Geräts die offenen WLAN-Accesspoints derjenigen Geräte, die nicht das Server-Gerät werden, deaktiviert werden. Eine indirekte Kontrolle durch das Server-Gerät liegt dann vor, wenn das Client-Gerät selbst bereits ein oder mehrere Client-Geräte kontrolliert.

Danach werden die Zugangsdaten für den gesicherten WLAN-Accesspoint an das verbleibende Server-Gerät übermittelt, welches mit diesen Zugangsdaten zunächst die direkt oder indirekt als Client-Geräte kontrollierten Geräte rekonfiguriert, so dass die rekonfigurierten Geräte eine Punkt-zu-Punkt Verbindung zum gesicherten WLAN-Accesspoint aufbauen.

Anschließend rekonfiguriert sich das Server-Gerät mit diesen Zugangsdaten und schaltet den eigenen, offenen WLAN-Accesspoint ab, so dass auch das rekonfigurierte Server-Gerät eine Punkt-zu-Punkt Verbindung zum gesicherten WLAN-Accesspoint aufbaut und das eingerichtete System am Ende keine offenen, ungesicherten WLAN-Accesspoints mehr aufweist.

Der Gedanke, der der Erfindung zu Grunde liegt besteht also darin, automatisiert ein temporäres Netzwerk bilden zu lassen, das einem einzigen Server-Gerät unterworfen ist, so dass die Informationen, die die einzelnen WLAN-fähigen Geräte zum Aufbau eines gesicherten Punkt-zu-Punkt-Netzwerks zu dem eigentlichen WLAN-Accesspoint erhalten müssen, lediglich einmal an das Server-Gerät übermittelt werden müssen und von diesem weiterverteilt werden. Dies ist ohne großen Aufwand und ohne viele Vorgaben realisierbar, weil es auf die exakte Struktur dieses temporären Netzwerks nicht ankommt, so dass man diese Struktur sich weitgehend zufällig aufbauen lassen kann.

Gemäß einer bevorzugten Ausführungsform des Verfahrens sucht bei der automatisierten Bestimmung des Server-Geräts durch Kommunikation der Geräte über die offenen WLAN-Accesspoints jedes Gerät nach anderen offenen WLAN-Accesspoints. Sobald es einen ersten anderen offenen WLAN-Accesspoint gefunden hat erfolgt zumindest dann, wenn das zu diesem offenen WLAN-Accesspoint gehörende Gerät in das System eingebunden werden soll, eine Verbindung und ein Austausch von Basisinformationen über eine standardisierte Schnittstelle.

Bevorzugt wird nun durch Anwendung eines Regelwerks ermittelt, ob der findende WLAN-Accesspoint in der Verbindung mit dem gefunden WLAN-Accesspoint als Server oder als Client fungiert, falls letzterer in das Netzwerk eingebunden wird, und der findende und der gefundene WLAN-Accesspoint dann entsprechend konfiguriert werden. Dabei schließt ein Client im Rahmen dieser Konfiguration seinen WLAN-Accesspoint, während der Server weiter nach anderen offenen WLAN-Accesspoints sucht und auch weiterhin von anderen WLAN-fähigen Geräten gefunden werden kann.

In einer vorteilhaften Weiterbildung des Verfahrens weist der Name bzw. die SSID des eigenen, offenen WLAN-Accesspoints jedes WLAN-fähigen Geräts mindestens einen festgelegten Praefix und eine Zahl auf. Im einfachsten Fall kann man als Zahl eine Zufallszahl verwenden, was aber dazu führen kann, dass in einem Anfangszustand mehrere WLAN-fähige Geräte mit offenen WLAN-Accesspoints, die gleich benannt sind vorhanden sind. Man muss dann aber im Regelwerk festlegen wie vorgegangen wird, wenn zufällig gleiche Zahlen bzw. gleich benannten WLAN-Accesspoints aufeinandertreffen.

Falls man dies vermeiden will, kann die Zahl beispielsweise eine aus der MAC-Adresse des WLAN-fähigen Geräts abgeleitete Zahl sein, was je nach Art der Bildung zu einer eindeutigeren oder eindeutigen Identifikation der WLAN-fähigen Geräte bzw. von deren WLAN-Accesspoints führen kann.

Anhand des Praefix wird in einer bevorzugten Variante des Verfahrens ermittelt, ob das Gerät, zu dessen Namen bzw. SSID für seinen eigenen offenen WLAN-Accesspoint das Praefix gehört, in das System eingebunden wird oder nicht. Damit wird die irrtümliche Einbindung von Fremdgeräten verhindert. Grundsätzlich kann es auch sinnvoll sein, mittels des Praefix zusätzlich Geräteklassen zu identifizieren, die sich wegen ihrer technischen Eigenschaften besonders gut als Server eignen.

Die Zahlen der Namen bzw. SSIDs der jeweiligen eigenen, offenen WLAN-Accesspoints können verwendet werden, um zu bestimmen, ob das Gerät zunächst als Server oder als Client in das System eingebunden wird. Beispielsweise kann einfach immer das Gerät mit der größeren Zahl die Rolle des Servers übernehmen. Vorzugsweise werden die Zugangsdaten für den gesicherten WLAN-Accesspoint über ein Handgerät, insbesondere ein Tablet oder ein Smartphone, an das Server-Gerät übermittelt. Dazu kann dieses insbesondere eine Verbindung mit dem nach wie vor offenen eigenen WLAN-Accesspunkt des Server-Geräts aufbauen, es sind aber auch andere Verbindungsarten möglich.

Die Erfindung wird nachfolgend anhand von Figuren, die Zwischenstadien im Ablauf des erfindungsgemäßen Verfahrens zeigen, näher erläutert. Es zeigt:
Fig. 1: einen Initialzustand nach dem ersten Start der Geräte, in dem alle WLAN-Accesspoints aktiviert sind;
Fig. 2: einen Zwischenzustand, in dem ein Server bestimmt ist, der die anderen WLAN-fähigen Geräte kontrolliert; und
Fig. 3: das aufgebaute Punkt-zu-Punkt-Netzwerk nach Abschluss der Konfiguration

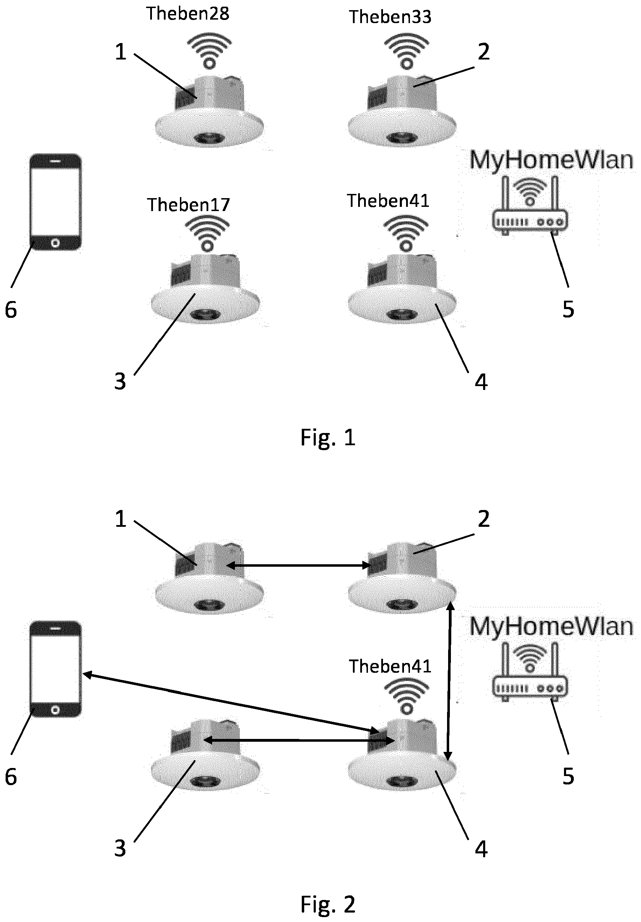

Figur 1 zeigt mehrere WLAN-fähige Geräte 1,2,3,4 und einen gesicherten WLAN-Accesspoint 5, mit dem die WLAN-fähigen Geräte 1,2,3,4 zu einem Punkt-zu-Punkt-Netzwerk verbunden werden sollen in einem Zustand unmittelbar nach dem Einschalten. Die WLAN-fähigen Geräte -hier als Sensoreinheiten für eine Beleuchtungssteuerung realisiert- haben beim Einschalten alle - wie durch das WLAN-Symbol verdeutlicht wird- einen eigenen, offenen WLAN-Accesspoint eingerichtet, dessen oberhalb des WLAN-Symbols dargestellter Name bzw. SSID jeweils aus dem Praefix "Theben" und einer Zufallszahl besteht. Der gesicherte WLAN-Accesspoint 5 ist über seine SSID "MyHomeWlan" auffindbar, zur Einbindung in ein Netzwerk mit diesem gesicherten WLAN-Accesspoint 5 ist jedoch ein Passwort erforderlich.

Grundsätzlich wäre eine nicht der Erfindung unterfallende Möglichkeit, das Punkt-zu-Punkt Netzwerk aufzubauen, dass man sich über ein mobiles Handgerät 6, das hier als Smartphone dargestellt ist, jeweils über die eigenen, offenen WLAN-Accesspoints der WLAN-fähigen Geräte 1,2,3,4 mit diesen verbindet, diese mit SSID und Passwort des gesicherten WLAN-Accesspoints 5 rekonfiguriert und den eigenen, offenen WLAN-Accesspoint abschaltet. Dies ist aber mühsam.

Stattdessen fangen in einer Ausführungsform des Verfahrens die WLAN-fähigen Geräte 1,2,3,4 allesamt an, nach anderen WLAN-Accesspoints zu suchen.

In einem rein exemplarischen Ablauf, der nun beschrieben wird und insbesondere hinsichtlich der Reihenfolge, mit der die unterschiedlichen WLAN-fähigen Geräte die offenen Accesspoints der jeweils anderen WLAN-fähigen Geräte finden zufällig ist, könnte beispielsweise zunächst das WLAN-fähige Gerät 2 als erstes den gesicherten WLAN-Accesspoint 5 mit dem Namen bzw. der SSID "MyHomeWlan", insbesondere wegen seiner Nähe zum gesicherten WLAN-Accesspoint 5, finden. Im Regelwerk ist aber hinterlegt, dass eine Server-Client-Beziehung nur zwischen solchen WLAN-Accesspoints aufgebaut werden soll, deren Name oder SSID den Praefix "Theben" enthält, so dass das WLAN-fähige Gerät 2 seine Suche wieder aufnimmt.

Allerdings könnte es im hier diskutierten Beispiel aber bereits vom WLAN-fähigen Gerät 1 gefunden worden sein, so dass als nächstes von diesem ein Kommunikationsaufbau angefragt wird. Das WLAN-fähige Gerät 2 beginnt daher als nächstes in einen Austausch von Basisinformationen mit dem WLAN-fähigen Gerät 1 über eine standardisierte Schnittstelle. Da die Analyse des Namens oder SSID des WLAN-fähigen Geräts 2, "Theben33" ergibt, dass sein Praefix "Theben" lautet, kommt es in diesem Fall auch zu einem im Regelwerk vorgesehenen Vergleich der Zahlenbestandteile der jeweiligen Namen bzw. SSIDs, aus dem sich ergibt, dass das WLAN-fähige Gerät 1, weil die in seinem Namen bzw. SSID enthaltene Zahl 28 kleiner ist als die im Namen bzw. der SSID des WLAN-fähigen Geräts 2 enthaltene Zahl 33, als Client zum WLAN-fähigen Gerät 2 konfiguriert wird und seinen eigenen, offenen WLAN-Accesspoint abschaltet. Sofern dieser WLAN-Accesspoint vor dem Abschalten von anderen WLAN-fähigen Geräten, beispielsweise den WLAN-fähigen Geräten 3 und 4, noch gefunden wurde, führen diese ihre Suche nun fort, weil das WLAN-fähige Gerät 1 nach dem Abschalten des eigenen, offenen WLAN-Accesspoints nicht mehr sichtbar ist.

Hat das WLAN-fähige Gerät 3 das WLAN-fähige Gerät 4 gefunden, wird in gleicher Weise wie oben beschrieben der Austausch von Basisinformationen eingeleitet, das Praefix verglichen, bei Übereinstimmung der Vergleich der Zahlenbestandteile vorgenommen, der hier ergibt, dass das WLAN-fähige Gerät 3 wegen des kleineren Zahlenbestandteils 17 der Client und das WLAN-fähige Gerät 4 wegen des größeren Zahlenbestandteils 41 der Server ist, und eine entsprechenden Konfiguration durchgeführt, wobei das WLAN-fähige Gerät 3 seinen eigenen offenen WLAN-Accesspoint abschaltet.

Schließlich finden sich auch noch die verbleibenden WLAN-fähige Geräte 2 und 4 (die beide aktuell als Server für die Geräte 1 bzw. 3 konfiguriert sind); es wird in gleicher Weise wie oben beschrieben der Austausch von Basisinformationen eingeleitet, das Praefix verglichen und wegen der Übereinstimmung der Vergleich der Zahlenbestandteile vorgenommen, der hier ergibt, dass das WLAN-fähige Gerät 2 mit dem Zahlenbestandteil 33 der Client und das WLAN-fähige Gerät 4 mit dem Zahlenbestandteil 41 der Server ist, und eine entsprechenden Konfiguration durchgeführt, wobei das WLAN-fähige Gerät 2 anschließend seinen eigenen offenen WLAN-Accesspoint abschaltet.

Damit hat sich die in Figur 2 dargestellte Konfiguration selbsttätig hergestellt, bei der außer dem gesicherten WLAN-Accesspoint 5 noch ein einziges der WLAN-fähigen Geräte 1,2,3,4, nämlich das WLAN-fähige Gerät 4, einen eigenen, offenen WLAN-Accesspoint aufweist und als Server die anderen der WLAN-fähigen Geräte 1,2,3 entweder unmittelbar (im Fall der WLAN-fähigen Geräte 2 und 3) oder mittelbar (im Fall des WLAN-fähigen Geräts 1) als jeweiligen Client kontrolliert.

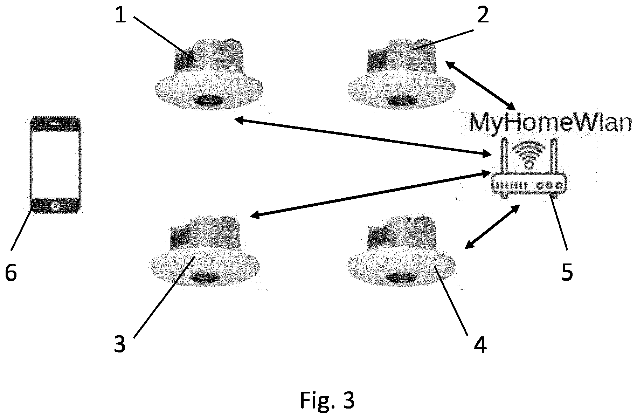

Mit dem offenen WLAN-Accesspoint des WLAN-fähigen Geräts 4, das als Server konfiguriert ist, verbindet der Installateur des Systems nun das Handgerät 6 und übermittelt mit diesem die Konfigurationsdaten, die es erlauben, eine Kommunikationsverbindung zum gesicherten WLAN-Accesspoint 5 aufzubauen. Der Server gibt diese Konfigurationsdaten an die Clients weiter und veranlasst diese, sich unter Verwendung dieser Daten zu rekonfigurieren, so dass sie Bestandteil eines Point-to-Point-Netzwerks über den gesicherten WLAN-Accesspoint 5 werden ehe sich der Server ebenfalls rekonfiguriert und seinen eigenen, offenen WLAN-Accesspoint ausschaltet, so dass das in Figur 3 gezeigte Netzwerk mit minimalem Aufwand für den Benutzer oder Installateur eingerichtet ist.

### Bezugszeichenliste

- 1,2,3,4: WLAN-fähiges Gerät
- 5: gesicherter WLAN-Accesspoint
- 6: mobiles Handgerät

## Patentansprüche

1. Verfahren zur Bildung eines Punkt- zu Punkt-Netzwerks aus mehreren WLAN-fähigen Geräten (1,2,3,4) und einem gesicherten WLAN-Accesspoint (5), bei dem
- jedes WLAN-fähige Gerät (1,2,3,4) nach dem erstmaligen Einschalten und/oder nach dem Starten einer Installationsroutine einen eigenen, offenen WLAN-Accesspoint mit einer individuellen SSID startet,
- durch Kommunikation der WLAN-fähigen Geräte (1,2,3,4) über die offenen WLAN-Accesspoints automatisiert ein Server-Gerät (4) bestimmt wird, das alle anderen WLAN-fähigen Geräte (1,2,3) direkt oder indirekt als Client-Gerät kontrolliert, wobei während der Bestimmung des Server-Geräts (4) die offenen WLAN-Accesspoints derjenigen WLAN-fähigen Geräte (1,2,3), die nicht das Server-Gerät (4) werden, deaktiviert werden,
- die Zugangsdaten für den gesicherten WLAN-Accesspoint (5) an das Server-Gerät (4) übermittelt werden,
- das Server-Gerät (4) mit diesen Zugangsdaten die direkt oder indirekt als Client-Geräte kontrollierten WLAN-fähigen Geräte (1,2,3) rekonfiguriert, so dass die rekonfigurierten Geräte eine Punkt-zu-Punkt Verbindung zum gesicherten WLAN-Accesspoint (5) aufbauen, und
- sich anschließend das Server-Gerät (4) mit diesen Zugangsdaten rekonfiguriert und den eigenen, offenen WLAN-Accesspoint abschaltet, so dass auch das rekonfigurierte Server-Gerät eine Punkt-zu-Punkt Verbindung zum gesicherten WLAN-Accesspoint (5) aufbaut.

2. Verfahren nach Anspruch 1, bei dem bei der automatisierten Bestimmung des Server-Geräts (4) durch Kommunikation der WLAN-fähigen Geräte (1,2,3,4) über die offenen WLAN-Accesspoints jedes WLAN-fähige Gerät (1,2,3,4) nach anderen offenen WLAN-Accesspoints sucht und sich sobald es einen ersten anderen offenen WLAN-Accesspoint gefunden hat zumindest dann, wenn er in das System eingebunden werden soll, mit diesem verbindet und über eine standardisierte Schnittstelle Basisinformationen austauscht.

3. Verfahren nach einem der Ansprüche 1 oder 2, bei dem durch Anwendung eines Regelwerks ermittelt wird, ob der gefundene WLAN-Accesspoint oder der findende WLAN-Accesspoint in der Verbindung mit dem gefunden WLAN-Accesspoint als Server (4) oder als Client (1,2,3) fungiert, falls er in das Netzwerk eingebunden wird, und der findende und der gefundene WLAN-Accesspoint dann entsprechend konfiguriert werden, wobei ein Client (1,2,3) im Rahmen dieser Konfiguration seinen WLAN- Accesspoint schließt und der Server (4) weiter nach anderen offenen WLAN-Accesspoints sucht.

4. Verfahren nach einem der Ansprüche 1 bis 3, bei dem der Name des eigenen, offenen WLAN-Accespoints jedes WLAN-fähigen Geräts (1,2,3,4) mindestens einen festgelegten Praefix und eine Zahl aufweist.

5. Verfahren nach Anspruch 4, bei dem die Zahl eine Zufallszahl ist.

6. Verfahren nach Anspruch 4, bei dem die Zahl eine aus der MAC-Acdresse des WLAN-fähigen Geräts (1,2,3,4) abgeleitete Zahl ist

7. Verfahren nach einem der Ansprüche 4 bis 6, bei dem anhand des Praefix ermittelt wird, ob das WLAN-fähige Gerät (1,2,3,4), zu dessen Namen für seinen eigenen offene WLAN-Accesspoint das Praefix gehört, in das System eingebunden wird oder nicht.

8. Verfahren nach einem der Ansprüche 4 bis 7, bei dem anhand eines Vergleichs der Zahlenbestandteile der Namen der jeweiligen eigenen, offenen WLAN-Accesspoints bestimmt wird, ob das Gerät zunächst als Server (4) oder als Client (1,2,3) in das System eingebunden wird.

9. Verfahren nach einem der Ansprüche 1 bis 8, bei dem die Zugangsdaten für den gesicherten WLAN-Accesspoint über ein mobiles Handgerät (6), insbesondere ein Tablet oder ein Smartphone, an das Server-Gerät (4) übermittelt werden.
